# FASCICULE DE BREVET EUROPEEN

(11) **EP 2 427 305 B1**
(45) Date de publication et mention de la délivrance du brevet: **16.01.2013**
(21) Numéro de dépôt: 10717159.7
(22) Date de dépôt: 06.05.2010
(51) Int. Cl.: B25J 9/10, B25J 13/02

(54) **PROCEDE DE COMPENSATION DE FROTTEMENTS DANS UN DISPOSITIF A RETOUR D'EFFORT EQUIPE D'UNE TRANSMISSION A CABLE**
VERFAHREN ZUR REIBUNGSKOMPENSATION IN EINER VORRICHTUNG MIT MIT KABELÜBERTRAGUNG VERSEHENER KRAFTRÜCKKOPPLUNG
METHOD FOR FRICTION COMPENSATION IN A DEVICE WITH FORCE FEEDBACK PROVIDED WITH CABLE TRANSMISSION

(30) Priorité: 06.05.2009 FR 0902181
(43) Date de publication de la demande: 14.03.2012
(73) Titulaire: Commissariat à l'Énergie Atomique et aux Énergies Alternatives, 75015 Paris (FR)
(72) Inventeur: GARREC, Philippe, F-91190 Gif Sur Yvette (FR)
(74) Mandataire: Parzy, Benjamin Alain
(86) Numéro de dépôt international: PCT/EP2010/056188
(87) Numéro de publication internationale: WO 2010/128106

(56) Documents cités:
- FR-A1- 2 852 265
- JP-A- 9 081 026
- JP-A- 11 063 126
- JP-A- 2005 052 946
- P. GARREC, J.P. MARTINS, J.P. FRICONNEAU: "Une nouvelle technologie d'orthèse portable" CONFÉRENCE HANDICAP 2004 17 juin 2004 (2004-06-17), 18 juin 2004 (2004-06-18), XP002569233 Paris, France Extrait de l'Internet: URL:http://www-list.cea.fr/fr/publications /docs/si/robotique/fr/handicap_2004_garrec .pdf [extrait le 2010-02-18]

## Description

L'invention est relative à un procédé de compensation de frottements dans un dispositif à retour d'effort équipé d'une transmission à câble.

### ARRIERE-PLAN DE L'INVENTION

On connaît des dispositifs à retour d'effort, notamment dans le domaine des orthèses, ou des servomanipulateurs. Dans divers systèmes dans lesquels l'utilisateur manipule un levier de commande pour imposer des mouvements à un bras ou à tout autre dispositif commandé, il est intéressant que l'utilisateur ressente dans le levier des efforts représentatifs des efforts s'exerçant sur le bras commandé. A cet effet, on utilise des dispositifs à retour d'effort qui sont attelés au levier de commande et qui exercent sur ceux-ci un effort représentatif de l'effort subi par le bras commandé.

Dans le domaine particulier des servomanipulateurs commandés par un bras maître manipulé par l'utilisateur, il est connu d'équiper le bras maître d'actionneurs comportant un motoréducteur agissant sur un câble de transmission.

Un tel bras maître est divulgué dans la publication "Une nouvelle technologie d'orthèse portable " (Garrec, Martins, Friconneau) présentée lors de la conférence Handicap 2004 à Paris.

La chaîne d'actionnement constituée par le motoréducteur et la transmission souffre de frottements internes qu'il est difficile de faire descendre en dessous de 5% de l'effort statique maximal de l'actionneur. Ces frottements, notamment dus aux frottements internes du motoréducteur, peuvent perturber les sensations de l'utilisateur, puisqu'ils introduisent des discontinuités dans les mouvements du bras.

Il est connu de mettre en oeuvre une compensation des frottements s'opposant à la libre manoeuvre du bras consistant à commander le motoréducteur pour qu'il exerce un effort compensant au moins partiellement lesdits frottements, en particulier les frottements internes du motoréducteur. Cependant, cette compensation n'est en général mise en oeuvre que lorsqu'il a été détecté que le câble a effectivement été mis en mouvement et que les parties mobiles du motoréducteur attelées au câble ont été déplacées, ce qui suppose que l'utilisateur a déjà exercé un effort suffisant pour vaincre au moins les frottements internes du motoréducteur.

### OBJET DE L'INVENTION

L'invention a pour objet de proposer un procédé pour compenser au moins partiellement les frottements dans un dispositif à retour d'effort à câble, permettant de diminuer les effets de seuil pouvant être ressentis par l'utilisateur.

### BREVE DESCRIPTION DE L'INVENTION

A cet effet, on propose un procédé de compensation de frottements dans un dispositif à retour d'effort comportant un organe de commande manipulé par un utilisateur et attelé à un câble tendu actionné par un motoréducteur, lequel comporte les étapes de :
- détecter une variation de flèche du câble occasionnée par une manipulation de l'organe de commande ;
- en réponse à cette détection, commander le motoréducteur pour qu'il développe un effort compensant au moins partiellement les frottements internes du motoréducteur s'opposant à un mouvement de l'organe de commande manipulé par l'utilisateur.

On rappelle ici que le câble présente naturellement une flèche qui résulte du poids du câble, et, si le câble est monté en boucle sur des poulies, des moments de réaction de flexion résultant de la tension nécessaire pour courber le câble autour des poulies. Dans la mesure où la tension du câble est généralement élevée en comparaison de son poids, l'effet des moments de flexion prédomine et donne lieu à déplacements transversaux du câble qui se produisent surtout dans le plan des poulies et qui provoquent la flèche du câble.

Au tout début de la manipulation, lorsque l'organe de commande manipulé par l'utilisateur commence à bouger en entraînant avec lui la partie du câble attelée à l'organe de commande, les parties mobiles du motoréducteur attelées au câble n'ont pas encore eu le temps d'être mises en mouvement en étant entraînées par le câble. Cependant, la portion de câble s'étendant entre l'organe de commande et le motoréducteur (ou entre l'organe de commande et une poulie adjacente sur laquelle le câble est enroulé) subit un allongement ou un raccourcissement qui conduit à une variation de sa flèche.

La détection de cette variation de flèche est utilisée selon l'invention comme signal pour commander le motoréducteur de sorte qu'il développe rapidement une force qui compense au moins partiellement les efforts internes du motoréducteur susceptibles de s'opposer au mouvement de l'organe de commande voulu par l'utilisateur.

Cette compensation intervient alors même que les parties mobiles du motoréducteur n'ont pas encore été mises en mouvement, de sorte l'utilisateur ressent moins, ou plus du tout si la compensation est totale, les effets des frottements internes de l'actionneur, qui ont ainsi pu être compensés à temps. La compensation rend le dispositif à retour d'effort plus fidèle et il est plus agréable à manipuler.

### BREVE DESCRIPTION DES FIGURES

L'invention sera mieux comprise à la lumière de la description qui suit des figures des dessins annexés, parmi lesquelles :
- la figure 1 représente de façon schématique un dispositif à retour d'effort à câble selon un mode particulier de réalisation de l'invention ;
- la figure 2 représente de façon schématique les diverses étapes du mouvement d'un dispositif à retour d'effort géré selon l'invention.

### DESCRIPTION DETAILLEE DE L'INVENTION

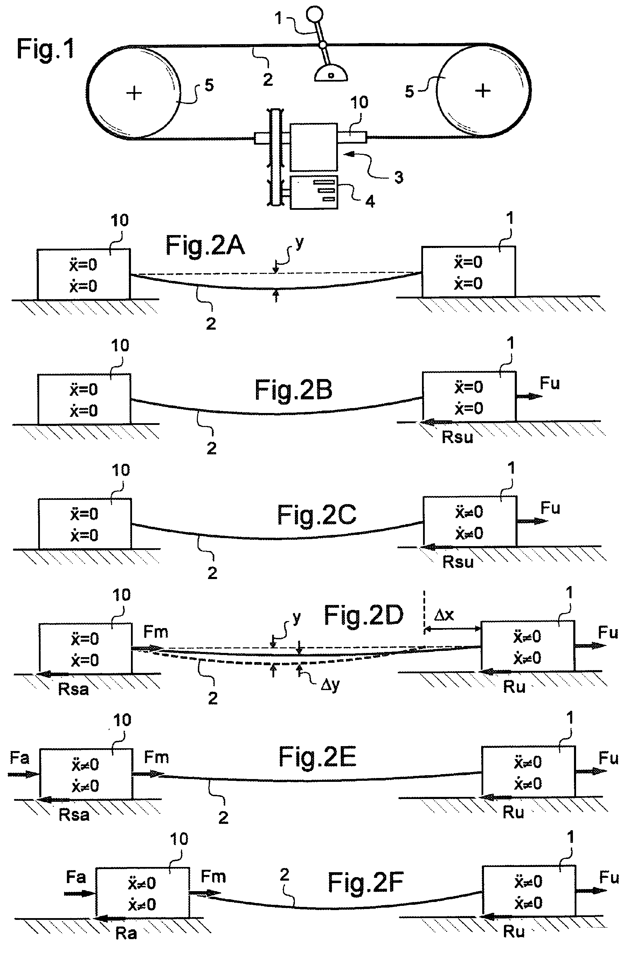

La figure 1 représente un dispositif à retour d'effort comportant un organe de commande 1 (par exemple un levier, une poignée, ou encore un segment de bras maître), attelé à un câble 2 qui est actionné par un motoréducteur 3 équipé d'un moteur 4 adapté à déplacer des parties mobiles du motoréducteur qui sont attelées au câble 2, en vue de faire défiler celui-ci dans un sens ou dans l'autre. Le câble 2 est ici monté entre deux poulies 5. Le dispositif comporte deux détecteurs de variation de flèche 6 du câble 2 qui sont disposés à proximité immédiate du câble 2 au niveau de la sortie de la poulie adjacente.

Le fonctionnement du dispositif est maintenant expliqué en relation avec la figure 2 montrant six étapes (référencées de A à F) de la mise en mouvement du dispositif. Sur cette figure les trois éléments de la chaîne d'actionnement sont représentés de façon symbolique. On reconnaît l'organe de commande 1 représenté sous la forme d'une masse soumise à des frottements, le câble 2 représenté schématiquement sous la forme d'un lien s'étendant entre l'organe de commande 1 et les parties mobiles 10 du motoréducteur 3 (notamment le rotor du moteur 4 et tous les éléments entraînés par le moteur), qui sont également représentées sous la forme d'une masse soumise à frottements. Ici, la portion de câble représentée à la figure 2 inclut celle qui, sur la figure 1, s'étend donc entre la poulie de gauche et le levier 1. On supposera que pour les besoins de l'explication, l'organe de commande 1 est, sur la figure 1, poussé de gauche à droite, comme indiqué par la flèche.

Sur chacune des masses a été notée l'état de la vitesse (*ẋ*) et l'état de l'accélération (*ẍ*) de l'élément concerné.

L'étape A représente le dispositif au repos complet. L'utilisateur ne manipule pas l'organe de commande 1, et le motoréducteur 3 n'est pas activé. La portion du câble s'étendant entre chaque poulie et le levier de commande présente une certaine flèche de repos y, résultant des effets de la gravité et de la flexion imposée au câble par la poulie adjacente.

A l'étape B, l'utilisateur a commencé à manipuler l'organe de commande 1 en appliquant un certain effort Fu sur l'organe de commande 1. Cependant, l'effort Fu reste inférieur à un seuil d'effort de frottement statique Rsu s'opposant au mouvement de l'organe de commande 1 de sorte que celui-ci ne bouge pas encore.

A l'étape C, l'effort Fu appliqué par l'utilisateur sur l'organe de commande 1 a dépassé le seuil d'effort de frottement statique Rsu de sorte que l'organe de commande a décollé et se met à bouger. Le frottement résistant diminue alors pour être égal au frottement cinématique, augmenté le cas échéant des frottements visqueux subis par l'organe de commande 1, et est noté Ru.

A l'étape D, l'organe de commande 1 est en mouvement alors que les parties mobiles 10 du motoréducteur 3 ne le sont pas encore. La portion de câble 2 représentée subit ici un allongement Δx qui est égal au déplacement du levier de commande 1 et qui provoque la transmission aux parties mobiles 10 du motoréducteur 3 d'un effort moteur Fm égal à la variation de longueur du câble Δx multiplié par la raideur K (Fm=K.Δx). Cependant, cet effort moteur Fm est inférieur aux frottements statiques internes Rsa du motoréducteur 3 s'opposant au mouvement des parties mobiles 10 de celui-ci, de sorte que les parties mobiles 10 restent immobiles.

Selon l'invention, on détecte une variation de flèche Δy du câble 2 par rapport à sa flèche de repos, cette variation étant provoquée par la variation de longueur du câble. La variation de flèche Δy (ici une diminution de la flèche de repos) est détectée par le détecteur de variation de flèche 6 qui est adapté à délivrer un signal électrique représentatif de la valeur et du sens de la variation de la flèche. Ce signal constitue la détection d'une intention de mouvement de la part de l'utilisateur.

En réponse à cette détection, et comme cela est visible à l'étape E, le moteur 4 du motoréducteur 3 est alimenté pour qu'il exerce très rapidement sur le câble un effort Fa tendant à compenser les frottements statiques internes Rsa du motoréducteur. Pour ce faire, on élabore d'une consigne d'effort égale à l'effort de frottement statique interne Rsa du motoréducteur 3, auquel on retranchera avantageusement l'effort moteur Fm précité. Ce dernier peut être facilement estimé en mesurant la variation de longueur de la portion de câble concernée. Cette mesure fait par exemple appel à des signaux de capteurs de position des éléments auxquels la portion de câble concernée est attelée.

Ainsi, lorsque le motoréducteur développe un effort Fa égal à cette consigne d'effort, celui-ci ajoute ses effets à l'effort moteur Fm pour compenser les efforts de frottement statiques internes Rsa du motoréducteur 3, de sorte que celui-ci n'oppose aucune résistance à la mise en mouvement de ses parties mobiles.

A l'étape F, les parties mobiles 10 du motoréducteur se sont mises en mouvement, de sorte que le frottement Rsa s'opposant au mouvement des parties mobiles de l'actionneur est maintenant réduit au frottement cinématique qui est plus faible que le frottement statique, augmenté le cas échéant du frottement visqueux lié à la vitesse de déplacement des parties mobiles de l'actionneur. Ce frottement est maintenant noté Ra. On veillera alors à ce que l'effort demandé au motoréducteur compense cet effort de frottement.

Après l'arrêt du dispositif, la commande de l'actionneur observe de nouveau le signal du détecteur de variation de flèche 6 pour détecter le prochain démarrage.

Si bien sûr l'utilisateur manoeuvre l'organe de commande 1 dans l'autre sens, la portion du câble illustrée à la figure 2 subira alors un raccourcissement, et donc une augmentation de flèche. On peut de la même façon détecter cette variation de flèche (dont le sens indique le sens du mouvement demandé par l'utilisateur). Alternativement, on peut utiliser le signal d'un deuxième capteur de variation de flèche, disposé pour détecter les variations de flèche d'une autre portion de câble qui se tend quand la première portion de câble s'allonge, et réciproquement.

Le ou les détecteurs de variation de flèche 6 peuvent bien sûr être de tout type (optique, magnétique...) En pratique, seul compte sa sensibilité, et non sa précision. Le détecteur de variation de flèche peut être disposé très librement le long du brin du câble, même si la zone au voisinage des poulies est préférable. Il conviendra de traiter le signal du détecteur de sorte à filtrer le bruit du signal causé notamment par des vibrations du dispositif faisant varier la flèche du câble sans que l'utilisateur n'ait manipulé l'organe de commande 1. En pratique, il est avantageux de prendre en compte le signal du détecteur uniquement au-delà d'un seuil de variation de flèche.

Il importe bien évidemment que le temps de réaction du motoréducteur à la détection de la variation de flèche du câble soit très court, compte tenu de la dynamique rapide du mouvement de l'organe de commande, et notamment de son décollement. Il importe dès lors de disposer d'un asservissement stable, qui nécessite en général un signal de vitesse de qualité élevée. Différentes solutions sont connues pour obtenir un tel signal : dérivation d'un signal d'un capteur de position à haute résolution, intégration du signal d'un accéléromètre.

L'invention n'est pas limitée à ce qui vient d'être décrit, mais englobe au contraire toute variante entrant dans le cadre défini par les revendications.

## Revendications

1. Procédé de compensation de frottements dans un dispositif à retour d'effort comportant un organe de commande (1) manipulé par un utilisateur et attelé à un câble (2) tendu actionné par un motoréducteur (3), lequel comporte les étapes de :
- détecter une variation de flèche du câble occasionnée par une manipulation de l'organe de commande ;
- en réponse à cette détection, commander le motoréducteur pour qu'il développe un effort (Fa) compensant au moins partiellement les frottements internes (Rsa) du motoréducteur s'opposant à un mouvement de l'organe de commande manipulé par l'utilisateur.

2. Procédé selon la revendication 1, dans lequel la variation de flèche est détectée au moyen d'un détecteur (6) placé à proximité immédiate du câble.

3. Procédé selon la revendication 1, dans lequel en réponse à la détection de la variation de flèche, une consigne d'effort est élaborée qui est égale au frottement statique interne du motoréducteur diminué de l'effort moteur transmis par le câble.

## Claims

1. A method of compensating friction in a force-feedback device comprising a control member (1) manipulated by a user and coupled to a tensioned cable (2) that is actuated by a motor and gearbox unit (3), which method comprises the steps of:
· detecting a variation in the sag of the cable caused by a manipulation of the control member; and
· in response to such a detection, controlling the unit so that it develops a force (Fa) that compensates, at least in part, the internal friction (Rsa) of the unit that opposes movement of the control member manipulated by the user.

2. A method according to claim 1, wherein the variation in sag is detected by means of a detector (6) placed in the immediate proximity of the cable.

3. A method according to claim 1, wherein, in response to detecting a variation in sag, a force setpoint is generated that is equal to the internal static friction of the unit minus the drive force transmitted by the cable.

## Patentansprüche

1. Verfahren zur Reibungskompensation in einer Vorrichtung zur Kraftrückführung, umfassend ein Steuerorgan (1), das durch einen Benutzer bedient wird und das an ein gespanntes Seil (2) gekoppelt ist, das von einem Getriebemotor (3) angetrieben wird, umfassend die folgenden Schritte:
- Feststellen einer durch eine Betätigung des Steuerorgans bewirkten Änderung des Durchhangs des Seiles;
- als Antwort auf dieses Feststellen Steuern des Getriebemotors derart, dass er eine Kraft (Fa) entwickelt, die zumindest teilweise die internen Reibungskräfte (Rsa) des Getriebemotors kompensiert, der sich einer Bewegung des Steuerorgans widersetzt, das durch einen Benutzer bedient wird.

2. Verfahren nach Anspruch 1, bei dem die Änderung des Durchhangs mittels eines Detektors (6), der sich in unmittelbarer Nähe zum Kabel befindet, festgestellt wird.

3. Verfahren nach Anspruch 1, bei dem als Antwort auf das Feststellen einer Änderung des Durchhangs ein Kraft-Sollwert erstellt wird, der gleich der inneren statischen Reibung des Getriebemotors ist, vermindert um die durch das Seil übertragene Motorkraft.
